# EUROPÄISCHE PATENTSCHRIFT

(11) **EP 3 620 311 B1**
(45) Veröffentlichungstag und Bekanntmachung des Hinweises auf die Patenterteilung: **16.06.2021**
(21) Anmeldenummer: 19190640.3
(22) Anmeldetag: 08.08.2019
(51) Int. Cl.: B60C 11/03, B60C 11/04

(54) **FAHRZEUGLUFTREIFEN**
PNEUMATIC TYRE
PNEUMATIQUES DE VÉHICULE

(30) Priorität: 04.09.2018 DE 102018214974
(43) Veröffentlichungstag der Anmeldung: 11.03.2020
(73) Patentinhaber: Continental Reifen Deutschland GmbH, 30165 Hannover (DE)
(72) Erfinder: Behr, Ulrich, 30165 Hannover (DE); Tomforde, Willem, 30165 Hannover (DE)
(74) Vertreter: Continental Corporation

(56) Entgegenhaltungen:
- JP-A- S6 325 107
- JP-B2- 3 150 623

## Beschreibung

Die Erfindung betrifft einen Fahrzeugluftreifen mit einem Laufstreifen mit Profilpositiven, wie Profilbändern oder Profilblockreihen, welche über den Laufstreifenumfang gemäß einer Pitchfolge aus zumindest zwei Pitches mit unterschiedlichen Umfangslängen angeordnet sind, und mit zumindest einer auf Profiltiefe ausgeführten Umfangsrille mit einem Rillengrund, Rillenflanken und Rillenkanten, wobei am Rillengrund eine Vielzahl von voneinander beabstandeten, freistehenden Vorsprüngen ausgebildet ist, welche eine Höhe von 10% bis 30% der Profiltiefe, eine Breite von 25% bis 40% der Breite der Umfangsrille und eine Erstreckungslänge von 15% bis 40% der Umfangslänge des jeweiligen Pitches aufweisen.

Ein derartiger Fahrzeugluftreifen ist beispielsweise aus der JP S6 325 107 A bekannt. Der Laufstreifen dieses Reifens ist mit einer an der Reifenäquatorialebene in Draufsicht gerade verlaufenden, zentralen Umfangsrille und in jeder Laufstreifenhälfte mit je einer, in Draufsicht zick-zack-förmig verlaufenden Umfangsrille versehen. In der zentralen Umfangsrille sind am Rillengrund als Steinauswerfer wirkende, freistehende Vorsprünge ausgebildet, welche in Draufsicht in Umfangsrichtung langgestreckt sechseckig sind, eine Höhe von 20% bis 60% der Profiltiefe, eine Breite von 25% bis 40% der Breite der Umfangsrille und eine Erstreckungslänge von 30% bis 80% der Umfangslänge des jeweiligen Pitches aufweisen. Zwischen den freistehenden Vorsprüngen weist die Umfangsrille einen verengten radial inneren Rillenabschnitt auf, welcher, im Querschnitt betrachtet, U-förmig ist und in radialer Richtung eine Höhe von 20% bis 60% der Profiltiefe aufweist. Die Rillenflanken sind im Bereich zwischen den freistehenden Vorsprüngen um 5° bis 25° zur radialen Richtung geneigt. Eine derartige Ausgestaltung der Umfangsrille soll die Wahrscheinlichkeit des Verfangens von Steinen in der Umfangsrille verringern.

Aus der US 4 345 632 A ist ein Nutzfahrzeugreifen mit einem Laufstreifen bekannt, welcher eine in Draufsicht zick-zack-förmig verlaufende Umfangsrille aufweist, an deren Rillengrund freistehende Vorsprünge als Steinauswerfer ausgebildet sind. Die Vorsprünge weisen eine Höhe von 20% bis 60% der Profiltiefe und in Umfangsrichtung eine Länge von beispielsweise 6,0 mm auf.

Die DE 37 27 050 A1 offenbart einen weiteren Nutzfahrzeugreifen mit einem Laufstreifen mit einer in Draufsicht zick-zack-förmig verlaufenden Umfangsrille mit am Rillengrund als Steinauswerfer wirkenden, freistehenden Vorsprüngen. Zwischen den Vorsprüngen verlaufen schmale, stegartig gestaltete Verbindungsvorsprünge.

Ferner ist aus der JP 3 150 623 B2 ein Nutzfahrzeugreifen mit einem Laufstreifen mit einem Blockprofil bekannt, welches durch vier in Draufsicht zick-zack-förmig verlaufende Umfangsrillen und Querrillen gebildet ist. Bei einem Ausführungsbeispiel begrenzen die Umfangs- und Querrillen drei Reihen von mittleren Profilblöcken, welche an den Quer- und Umfangsrillen Blockflanken aufweisen, die sich jeweils aus einem in radialer Richtung verlaufenden, radial inneren Flankenabschnitt und einem zur radialen Richtung geneigten, radial äußeren Flankenabschnitt zusammensetzen. Die Flankenabschnitte schließen in einer Tiefe von 70% bis 85% der Profiltiefe aneinander an. Eine der mittleren Profilblockreihen befindet sich im Bereich des Reifenzenits. Die die Profilblöcke dieser Profilblockreihe begrenzenden Rillen weisen jeweils im Wesentlichen mittig auf den Rillengründen befindliche Erhebungen mit einer Höhe von 5% bis 10% der Profiltiefe sowie Erhebungen mit einer Höhe von 10% bis 25% der Profiltiefe auf, wobei jeweils eine niedrigere Erhebung abwechselnd auf eine höhere Erhebung folgt. Bei einem Nutzfahrzeugreifen mit einem solchen Laufstreifen soll die Gefahr, dass Steine Schäden am Blockprofil verursachen, gering sein.

Damit als Steinauswerfer wirkende Vorsprünge auf zuverlässige Weise ihre Funktion ausüben können, ist es erforderlich, die Vorsprünge in einer gewissen "Mindestgröße" auszuführen. Solche Vorsprünge verringern daher das Rillenleervolumen bzw. lokal den Rillenquerschnitt der Umfangsrille deutlich, was im Hinblick auf die Wasserableiteigenschaften nicht optimal ist.

Der Erfindung liegt daher die Aufgabe zugrunde, bei einem Fahrzeugluftreifen der eingangs genannten Art die Wasserableiteigenschaften zu verbessern, wobei die Effektivität der als Steinauswerfer wirkende Vorsprünge nicht beeinträchtigt werden soll.

Gelöst wird die gestellte Aufgabe erfindungsgemäß dadurch, dass seitlich jedes freistehenden Vorsprunges beide Rillenkanten der Umfangsrille derart abschnittsweise angefast sind, dass die Rillenflanken Fasen aufweisen, welche jeweils den freistehenden Vorsprung in Umfangsrichtung zumindest einseitig überragen, zur radialen Richtung unter einem Winkel von 35° bis 55° verlaufen und eine Breite von 1,2 mm bis 2,0 mm aufweisen.

Durch das Vorsehen derartiger Fasen lässt sich im Bereich der Vorsprünge der Rillenquerschnitt vergrößern, sodass auch das Rillenvolumen vergrößert ist. Dadurch ist das Wasseraufnahmevermögen der Umfangsrille erhöht, wodurch die Wasserableiteigenschaften verbessert sind. Die Fasen tragen zudem zu einer Verbesserung des Traktionseigenschaften des Reifens bei und verringern zusätzlich die Wahrscheinlichkeit des Verklemmens vom Steinen im Bereich des Vorsprunges, sodass die Fasen auch eine gewisse synergistische Wirkung mit den Vorsprüngen zeigen.

Ein Verklemmen von Steinen im Bereich des Vorsprunges wird zusätzlich dadurch behindert, dass die Fasen den freistehenden Vorsprung in entgegengesetzte Umfangsrichtungen überragen. Bevorzugt ist eine Ausführung, bei welcher zumindest eine, vorzugsweise beide, Fase(n) den freistehenden Vorsprung beidseitig überragen und bei welcher die Fasen den freistehenden Vorsprung um mindestens 5,0 mm überragen.

Bei einer bevorzugten Ausführung beträgt der Winkel, unter welchem die Fasen zur radialen Richtung verlaufen, 45° bis 50°. Diese Maßnahme stabilisiert die Profilpositive und unterstützt die Traktionseigenschaften.

Für die Wasserableitung im Bereich des freistehenden Vorsprunges ist es vorteilhaft, wenn die an der einen Rillenkante ausgebildete Fase zu der an der anderen Rillenkante ausgebildeten Fase in Umfangsrichtung einen Versatz von 6% bis 15%, insbesondere von 8% bis 12%, der Umfangslänge des jeweiligen Pitches aufweist.

Gemäß einer weiteren bevorzugten Variante beträgt die Höhe des freistehenden Vorsprunges bis zu 20% der Profiletiefe. Ein derart gestalteter Vorsprung zeigt einerseits eine gute Wirkung als Steinauswerfer und verringert andererseits den Rillenquerschnitt der Umfangsrille lediglich geringfügig.

Gemäß einer weiteren bevorzugten Variante sind in jedem Pitch an jeder Rillenflanke zwei am Rillengrund der Umfangsrille ausgebildete, in Umfangsrichtung langgestreckte, seitliche Vorsprünge vorgesehen, wobei die Fasen an den Rillenkanten jeweils zwischen den seitlichen Vorsprüngen verlaufen. Diese seitlichen Vorsprünge wirken mit den freistehenden Vorsprüngen auf eine für die steinauswerfende Wirkung vorteilhafte Weise zusammen. Darüber hinaus wirken die seitlichen Vorsprünge stabilisierend auf die Rillenflanken und damit auf die Rillenkanten, sodass die Wirkung der Rillenkanten als Traktionskanten verbessert ist. Beim Fahren auf mit Matsch- oder Schnee bedecktem Untergrund unterstützt die Kombination von freistehenden Vorsprüngen und seitlichen Vorsprüngen die Traktionseigenschaften des Reifens.

Gemäß einer weiteren bevorzugten Variante ist jeder seitliche Vorsprung in radialer Richtung durch eine Deckfläche begrenzt, welche zur Mitte der Umfangsrille abfällt und zur radialen Richtung unter einem konstanten Winkel von 30° bis 55° geneigt ist. Derart geneigte Flächen bewirken eine gute Abstützung der Rillenflanken, wodurch die Wirkung der Rillenkanten als Traktionskanten verbessert ist und behindern ein Verklemmen von Steinen in der Umfangsrille.

Es ist ferner bevorzugt, wenn die Deckfläche jedes seitlichen Vorsprunges rilleninnenseitig an einer Kante endet, welche in einer konstanten Tiefe sowie in Draufsicht unter einem Winkel von 1° bis 3° zur Umfangsrichtung verläuft.

Gemäß einer weiteren bevorzugten Variante schließen die seitlichen Vorsprünge in Draufsicht an die Fasen der Rillenkanten an. Dies verbessert eine synergistische Wirkung zwischen den Fasen und den Vorsprüngen.

Die Wirkung der seitlichen Vorsprünge wird durch bevorzugte Abmessungen der Vorsprünge weiter verbessert. Es ist dabei von Vorteil, wenn jeder seitliche Vorsprung in Umfangsrichtung eine Erstreckungslänge von 16,0 mm bis 25,0 mm aufweist. Ferner ist es bevorzugt, wenn jeder seitliche Vorsprung eine Höhe von 35% bis 65% der Profiltiefe aufweist. Insbesondere weist jeder seitliche Vorsprung in axialer Richtung eine Breite von 10% bis 25% der Breite der Umfangsrille auf. Dadurch verbleibt zwischen den Vorsprüngen ein für die Wasserdrainage in der Umfangsrille vorteilhafter "Kanal".

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Ausschnitt eines Laufstreifens eines Fahrzeugluftreifens mit einer Ausführungsvariante der Erfindung,
Fig. 2 eine vergrößerte Draufsicht auf einen Umfangsabschnitt des Ausschnittes des Laufstreifens aus Fig. 1,
Fig. 3 einen vergrößerten Schnitt entlang der Linie III-III der Fig. 2,
Fig. 4 einen vergrößerten Schnitt entlang der Linie IV-IV der Fig. 2 und
Fig. 5 einen vergrößerten Schnitt entlang der Linie V-V der Fig. 2.

Gemäß der Erfindung ausgeführte Fahrzeugluftreifen sind Reifen in Radialbauart, vorzugsweise für Personenkraftwagen, Vans, SUVs oder Light-Trucks. Ferner sind erfindungsgemäße Fahrzeugluftreifen insbesondere sogenannte OTR-Reifen (Off-the-Road-Reifen), welche sich besonders zum Fahren auf unbefestigten Fahrbahnen, beispielsweise auf Schotterstraßen sowie auf weichem, beispielsweise erdigem oder matschigem, Untergrund eignen.

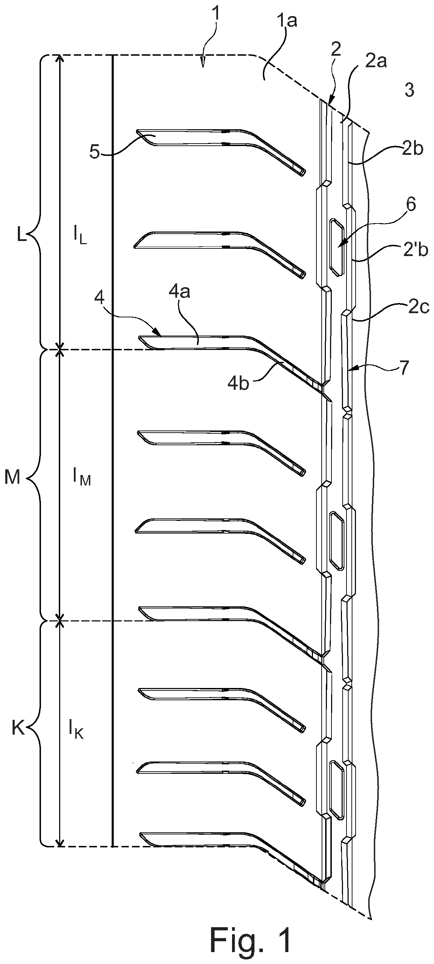

Fig. 1 zeigt einen Ausschnitt eines Laufstreifens mit einer schulterseitigen Profilblockreihe 1, welche durch eine in Draufsicht gerade verlaufende Umfangsrille 2 von einem weiteren, lediglich schematisch angedeuteten, umlaufenden Profilpositiv 3, beispielsweise einem Profilband oder ebenfalls einer Profilblockreihe, getrennt ist. Die nicht gezeigten Bereiche des Laufstreifens können in bekannter Weise ausgeführt sein.

Der Laufstreifen ist gemäß einem Verfahren der Pitchlängenvariation geräuschoptimiert und setzt sich aus in Umfangsrichtung aufeinanderfolgenden Pitches - gleichartig gestalteten Profilabschnitten - zusammen, wobei bei dem gezeigten Ausführungsbeispiel Pitches L, M, K mit drei unterschiedlichen Umfangslängen l_{L}, l_{M}, l_{K} vorgesehen sind. In Fig. 1 ist beispielhaft eine Aufeinanderfolge eines Pitches L mit der größten Umfangslänge l_{L}, eines Pitches M mit der Umfangslänge l_{M} und eines Pitches K mit der kleinsten Umfangslänge l_{K} vorgesehen, wobei die Pitchgrenzen mit gestrichelten Linien angedeutet sind. Die Pitches L, M, K werden über den Laufstreifenumfang innerhalb einer sogenannten Pitchfolge, die üblicherweise rechnerisch ermittelt wird, angeordnet. Das Verhältnis der drei Umfangslängen l_{L} : l_{M} : l_{K} ist vorzugsweise im üblichen Bereich gewählt und beträgt beispielsweise 1,4 : 1,2 : 1,0.

Jedes Pitch L, M, K umfasst eine blockartige Profilstruktur 1a aus der Profilblockreihe 1 und eine an diese in Umfangsrichtung angrenzende, in die Umfangsrille 2 einmündende Querrille 4, welche sich beim gezeigten Ausführungsbeispiel aus einem in Draufsicht in axialer Richtung verlaufenden laufstreifenaußenseitigen Querrillenabschnitt 4a und einem in die Umfangsrille 2 einmündenden laufstreifeninnenseitigen Querrillenabschnitt 4b zusammensetzt, wobei der laufstreifeninnenseitige Querrillenabschnitt 4b in Draufsicht unter einem Winkel von vorzugsweise 25° bis 45° zur axialen Richtung verläuft. Innerhalb jeder blockartigen Profilstruktur 1a verlaufen ferner zwei im Wesentlichen gleichmäßig in der Profilstruktur 1a verteilte Querrillen 5, welche sich im Wesentlichen parallel zu den Querrillen 4 erstrecken.

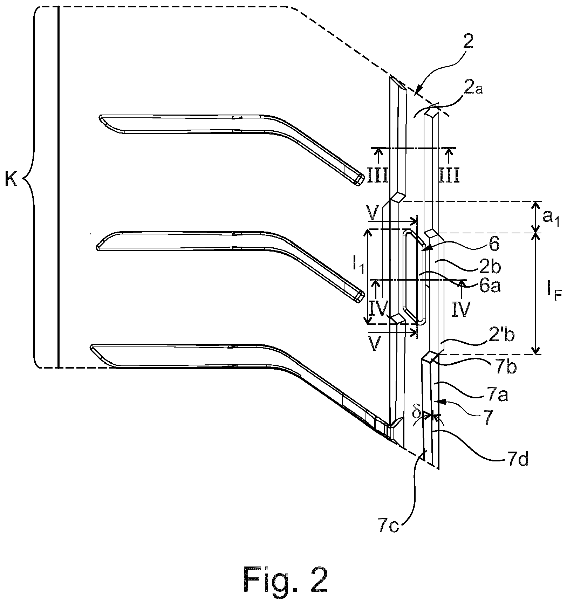

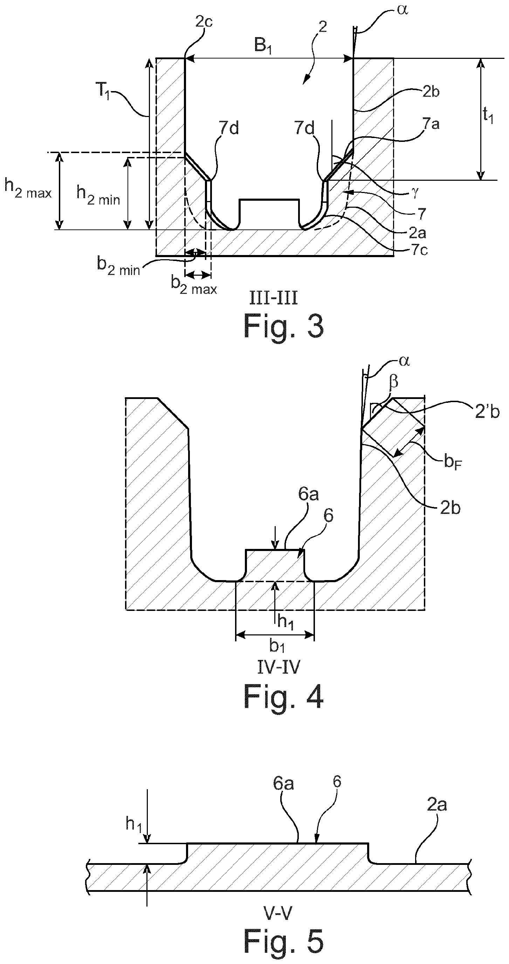

Wie insbesondere in Fig. 2 zu erkennen ist, weist die Umfangsrille 2 einen Rillengrund 2a und zwei Rillenflanken 2b auf, welche, im Querschnitt betrachtet, zur radialen Richtung unter einem Winkel α (Fig. 3, Fig. 4) von vorzugsweise bis zu 5° oder alternativ in radialer Richtung verlaufen. Wie in Fig. 3 und Fig. 4 durch gestrichelte Linien angedeutet ist, ist der Rillengrund 2a, im Querschnitt betrachtet, vorzugsweise flach U-förmig ausgeführt.

Gemäß Fig. 1 weist die Umfangsrille 2 an der Laufstreifenperipherie in Umfangsrichtung verlaufende Rillenkanten 2c auf, welche innerhalb jedes Pitches L, M, K abschnittsweise angefast sind, sodass jede Rillenflanke 2b innerhalb jedes Pitches L,M, K eine Fase 2'b, also eine zur Laufstreifenperiphere verlaufende Schrägfläche, aufweist. Gemäß Fig. 4 verläuft jede Fase 2'b zur radialen Richtung unter einem Winkel β von 35° bis 55°, insbesondere von 45° bis 50°, und weist eine Breite b_{F} von 1,2 mm bis 2,0 mm auf. Ferner weist die Fase 2'b eine Umfangslänge l_{F} (Fig. 2) von 25% bis 40%, insbesondere von bis zu 35%, der Umfangslänge l_{L}, l_{M}, l_{K} des jeweiligen Pitches L, M, K auf, wobei die Umfangslänge l_{F} im Durchschnitt insbesondere 18,0 mm bis 25,0 mm beträgt. Wie in Fig. 2 für den Pitch K gut zu erkennen ist, sind die an der einen Rillenflanke 2b ausgebildeten Fasen 2'b zu den an der anderen Rillenflanke 2b ausgebildeten Fasen 2'b in Umfangsrichtung versetzt, wobei innerhalb jedes Pitches L, M, K die an der einen Rillenkante 2c ausgebildete Fase 1'b die an der anderen Rillenkante 2c ausgebildete Fase 1'b - bezogen auf die Umfangsrichtung - abschnittsweise "überlappt". Der in Umfangsrichtung zwischen gleich positionierten Enden der Fasen 2'b ermittelte Versatz a₁ beträgt 6% bis 15%, insbesondere 8% bis 12%, der Umfangslänge l_{L}, l_{M}, l_{K} des jeweiligen Pitches L, M, K (Fig. 1).

Gemäß Fig. 1 ist innerhalb jedes Pitches L, M, K am Rillengrund 2a der Umfangsrille 2 im Bereich zwischen den Fasen 2'b mittig ein von den Rillenflanken 2b beabstandeter, freistehender Vorsprung 6 ausgebildet. Ferner sind in jedem Pitch L, M, K an jeder Rillenflanke 2b zwei balkenartige seitliche Vorsprünge 7 ausgebildet, welche in Draufsicht im Wesentlichen an die Fasen 2'b angrenzen und bis den laufstreifeninnenseitigen Querrillenabschnitten 4b bzw. zur Pitchgrenze reichen (siehe auch Fig. 2).

Gemäß Fig. 3 weist die Umfangsrille 2 zwischen ihren Rillenkanten 2c eine Breite B₁ von vorzugsweise 6,0 mm bis 8,0 mm auf und ist an ihren von Vorsprüngen 6, 7 freien Stellen in bekannter Weise in radialer Richtung auf die vorgesehene Profiltiefe T₁ ausgeführt, welche vorzugsweise 6,5 mm bis 8,5 mm beträgt.

Wie Fig. 2 zeigt, ist jeder freistehende Vorsprung 6 in Draufsicht in Umfangsrichtung langestreckt parallellogrammförmig und weist zwei spitzwinkelige und zwei stumpfwinkelige Eckbereiche auf, welche beim gezeigten Ausführungsbeispiel abgerundet sind. Die seitlich eines Vorsprunges 6 befindlichen Fasen 2'b an den Rillenkanten 2c überragen den Vorsprung 6 in entgegengesetzte Umfangsrichtungen um insbesondere mindestens 5,0 mm. Jeder Vorsprung 6 ist in radialer Richtung durch eine im Wesentlichen parallel zur Laufstreifenperipherie ausgerichtete Deckfläche 6a (siehe auch Fig. 4, Fig. 5) begrenzt, weist in radialer Richtung eine Höhe h₁ (Fig. 4, Fig. 5) von 10% bis 30%, insbesondere von bis zu 20%, der Profiltiefe T₁, in axialer Richtung an seiner am Rillengrund 2a liegenden Basis eine Breite b₁ (Fig. 4) von 25% bis 40%, insbesondere von 30% bis 35%, der Breite B₁ der Umfangsrille 2 und in Umfangsrichtung an seiner Basis eine Erstreckungslänge l₁ (Fig. 2) von 15% bis 40%, insbesondere von 18% bis 35%, und besonders bevorzugter Weise von 20% bis 30%, der Umfangslänge l_{L}, l_{M}, l_{K} des jeweiligen Pitches L, M, K auf. Die Erstreckungslänge l₁ des Vorsprung 6 beträgt im Durchschnitt insbesondere 16,0 mm bis 25,0 mm.

Jeder seitliche Vorsprung 7 schließt unmittelbar an den Rillengrund 2a an (Fig. 3) und ist insgesamt balkenartig gestaltet, in radialer Richtung durch eine Deckfläche 7a, in Umfangsrichtung durch zwei Stirnflächen 7b und seitlich durch eine im Wesentlichen parallel zur Rillenflanke 2b und zum Rillengrund 2a verlaufende Seitenfläche 7c (Fig. 3) begrenzt. Gemäß Fig. 3 fällt die Deckfläche 7a in Richtung zur Mitte der Umfangsrille 2 ab und verläuft, im Querschnitt betrachtet, zur radialen Richtung unter einem konstanten Winkel γ von 30° bis 55°. Die Seitenfläche 7c ist, im Querschnitt betrachtet, zumindest abschnittsweise derart gekrümmt, dass sie knickfrei an den Rillengrund 2a anschließt.

Die Deckfläche 7a und die Seitenfläche 7c schließen über eine Kante 7d (siehe auch Fig. 2) aneinander an, welche in einer konstanten Tiefe t₁ sowie in Draufsicht unter einem Winkel δ (Fig. 2) von 1° bis 3° zur Umfangsrichtung verläuft, sodass auch die Seitenfläche 7c in Draufsicht unter dem Winkel δ verläuft (Fig. 1).

Bedingt durch den konstanten Winkel γ, unter welchem die Deckfläche 7a verläuft, sowie durch die zur Umfangsrichtung geneigte Kante 7d weist der Vorsprung 7 gegenüber dem Niveau der Rillenflanke 2b eine sich über den Verlauf der Kante 7d kontinuierlich ändernde, in axialer Richtung gemessene Breite sowie gegenüber dem Niveau des Rillengrundes 2a eine sich über den Verlauf der Kante 7d kontinuierlich ändernde, in radialer Richtung gemessene Höhe auf. In Fig. 3 ist zur Veranschaulichung an der in Fig. 3 linken Kante 7d eine gegenüber dem Niveau der Rillenflanke 2b ermittelte minimale Breite b₂ₘᵢₙ und die analog ermittelte maximale Breite b₂ₘₐₓ des Vorsprunges 7 gekennzeichnet. Ferner sind die an der Rillenflanke 1b gegenüber dem tiefsten Punkt der Umfangsrille 1 in radialer Richtung gemessene minimale Höhe h₂ₘᵢₙ und die analog ermittelte maximale Höhe h₂ₘₐₓ des Vorsprunges 7 eingezeichnet. Die Breiten b₂ₘᵢₙ, b₂ₘₐₓ betragen 10% bis 25% der Breite B₁ der Umfangsrille 1 und die Höhen h₂ₘᵢₙ, h₂ₘₐₓ betragen 25% bis 100% insbesondere 35% bis 65%, der Profiltiefe T₁.

Die Erfindung ist auf das beschriebene Ausführungsbeispiel nicht beschränkt. Insbesondere kann die speziell mit Vorsprüngen und Fasen versehene Umfangsrille 2 auch im mittleren Laufstreifenbereich verlaufen.

### Bezugszeichenliste

### (Bestandteil der Beschreibung)

- 1 ......................: Profilblockreihe
- 1a ....................: Profilstruktur
- 2......................: Umfangsrille
- 2a....................: Rillengrund
- 2b....................: Rillenflanke
- 2'b...................: Fase
- 2c....................: Rillenkante
- 3......................: Profilpositiv
- 4......................: Querrille
- 4a, 4b...............: Querrillenabschnitt
- 5......................: Querrille
- 6......................: freistehender Vorsprung
- 6a ....................: Deckfläche
- 7......................: seitlicher Vorsprung
- 7a....................: Deckfläche
- 7b....................: Stirnfläche
- 7c....................: Seitenfläche
- 7d....................: Kante
- a₁ .....................: Versatz
- B₁, b₁, b_{F}..........: Breite
- b₂ₘᵢₙ.................: minimale Breite
- b₂ₘₐₓ ................: maximale Breite
- h₁ .....................: Höhe
- h₂ₘᵢₙ.................: minimale Höhe
- h₂ₘₐₓ ................: maximale Höhe
- l₁......................: Erstreckungslänge
- l_{F}, l_{L}, l_{M}, l_{K}.......: Umfangslänge
- t₁......................: Tiefe
- T₁ ....................: Profiltiefe
- L, M, K............: Pitch
- α, β, γ, δ...........: Winkel

## Patentansprüche

1. Fahrzeugluftreifen mit einem Laufstreifen mit Profilpositiven, wie Profilbändern oder Profilblockreihen, welche über den Laufstreifenumfang gemäß einer Pitchfolge aus zumindest zwei Pitches (L, M, K) mit unterschiedlichen Umfangslängen (l_{L}, l_{M}, l_{K}) angeordnet sind, und mit zumindest einer auf Profiltiefe (T₁) ausgeführten Umfangsrille (2) mit einem Rillengrund (2a), Rillenflanken (2b) und Rillenkanten (2c), wobei am Rillengrund (2a) eine Vielzahl von voneinander beabstandeten, freistehenden Vorsprüngen (6) ausgebildet ist, welche eine Höhe (h₁) von 10% bis 30% der Profiltiefe (T₁), eine Breite (b₁) von 25% bis 40% der Breite (B₁) der Umfangsrille (2) und eine Erstreckungslänge (l₁) von 15% bis 40% der Umfangslänge (l_{L}, l_{M}, l_{K}) des jeweiligen Pitches (L, M, K) aufweisen,
**dadurch gekennzeichnet,**
**dass** seitlich jedes freistehenden Vorsprunges (6) beide Rillenkanten (2c) der Umfangsrille (2) derart abschnittsweise angefast sind, dass die Rillenflanken (2b) Fasen (2'b) aufweisen, welche jeweils den freistehenden Vorsprung (6) in Umfangsrichtung zumindest einseitig überragen, zur radialen Richtung unter einem Winkel (β) von 35° bis 55° verlaufen und eine Breite (b_{F}) von 1,2 mm bis 2,0 mm aufweisen.

2. Fahrzeugluftreifen nach Anspruch 1, **dadurch gekennzeichnet, dass** die Fasen (2'b) den freistehenden Vorsprung (6) in entgegengesetzte Umfangsrichtungen überragen.

3. Fahrzeugluftreifen nach Anspruch 1, **dadurch gekennzeichnet, dass** zumindest eine, vorzugsweise beide, Fase(n) (2'b) den freistehenden Vorsprung (6) beidseitig überragen.

4. Fahrzeugluftreifen nach einem der Ansprüche 1 bis 3, **dadurch gekennzeichnet, dass** die Fasen (2'b) den freistehenden Vorsprung (6) um mindestens 5,0 mm überragen.

5. Fahrzeugluftreifen nach einem der Ansprüche 1 bis 4, **dadurch gekennzeichnet, dass** der Winkel (β), unter welchem die Fasen (2'b) zur radialen Richtung verlaufen, 45° bis 50° beträgt.

6. Fahrzeugluftreifen nach einem der Ansprüche 1 bis 5, **dadurch gekennzeichnet, dass** die an der einen Rillenkante (2c) ausgebildete Fase (2'b) zu der an der anderen Rillenkante (2b) ausgebildeten Fase (2'b) in Umfangsrichtung einen Versatz (a₁) von 6% bis 15%, insbesondere von 8% bis 12%, der Umfangslänge (l_{L}, l_{M}, l_{K}) des jeweiligen Pitches (L, M, K) aufweist.

7. Fahrzeugluftreifen nach einem der Ansprüche 1 bis 6, **dadurch gekennzeichnet, dass** die Höhe (h₁) des freistehenden Vorsprunges (4) bis zu 20% der Profiltiefe (T₁) beträgt.

8. Fahrzeugluftreifen nach einem der Ansprüche 1 bis 7, **dadurch gekennzeichnet, dass** in jedem Pitch (L, M, K) an jeder Rillenflanke (2b) zwei am Rillengrund (2a) der Umfangsrille (2) ausgebildete, in Umfangsrichtung langgestreckte, seitliche Vorsprünge (7) vorgesehen sind, wobei die Fasen (2'b) an den Rillenkanten (2c) jeweils zwischen den seitlichen Vorsprüngen (7) verlaufen.

9. Fahrzeugluftreifen nach Anspruch 8, **dadurch gekennzeichnet, dass** jeder seitliche Vorsprung (7) in radialer Richtung durch eine Deckfläche (7a) begrenzt ist, welche zur Mitte der Umfangsrille (2) abfällt und zur radialen Richtung unter einem konstanten Winkel (γ) von 30° bis 55° geneigt ist.

10. Fahrzeugluftreifen nach Anspruch 9, **dadurch gekennzeichnet, dass** die Deckfläche (7a) jedes seitlichen Vorsprunges (7) rilleninnenseitig an einer Kante (7d) endet, welche in einer konstanten Tiefe (t₁) sowie in Draufsicht unter einem Winkel (δ) von 1° bis 3° zur Umfangsrichtung verläuft.

11. Fahrzeugluftreifen nach einem der Ansprüche 8 bis 10, **dadurch gekennzeichnet, dass** die seitlichen Vorsprünge (7) in Draufsicht an die Fasen (2'b) der Rillenkanten (2c) anschließen.

12. Fahrzeugluftreifen nach einem der Ansprüche 8 bis 11, **dadurch gekennzeichnet, dass** jeder seitliche Vorsprung (7) in Umfangsrichtung eine Erstreckungslänge (l₁) von 16,0 mm bis 25,0 mm aufweist.

13. Fahrzeugluftreifen nach einem der Ansprüche 8 bis 12, **dadurch gekennzeichnet, dass** jeder seitliche Vorsprung (7) eine Höhe (h₂ₘᵢₙ, h₂ₘₐₓ) von 35% bis 65% der Profiltiefe (T₁) aufweist.

14. Fahrzeugluftreifen nach einem der Ansprüche 8 bis 13, **dadurch gekennzeichnet, dass** jeder seitliche Vorsprung (7) in axialer Richtung eine Breite (b₂ₘᵢₙ, b₂ₘₐₓ) von 10% bis 25% der Breite (B₁) der Umfangsrille (2) aufweist.

## Claims

1. Pneumatic vehicle tyre with a tread comprising profile positives, such as profile strips or rows of tread bars, which are arranged over the circumference of the tread according to a pitch sequence comprising at least two pitches (L, M, K) with different circumferential lengths (l_{L}, l_{M}, l_{K}), and comprising at least one circumferential groove (2), made to the depth of the tread pattern (T₁) and having a groove base (2a), groove flanks (2b) and groove edges (2c), wherein there are formed on the groove base (2a) a multiplicity of spaced-apart, freestanding projections (6), which have a height (h₁) of 10% to 30% of the depth of the tread pattern (T₁), a width (b₁) of 25% to 40% of the width (B₁) of the circumferential groove (2) and a length of extent (l₁) of 15% to 40% of the circumferential length (l_{L}, l_{M}, l_{K}) of the respective pitch (L, M, K),
**characterized**
**in that** to the sides of each freestanding projection (6) both groove edges (2c) of the circumferential groove (2) are bevelled in certain portions in such a way that the groove flanks (2b) have bevels (2'b), which respectively protrude beyond the freestanding projection (6) in the circumferential direction, at least on one side, run in relation to the radial direction at an angle (β) of 35° to 55° and have a width (b_{F}) of 1.2 mm to 2.0 mm.

2. Pneumatic vehicle tyre according to Claim 1, **characterized in that** the bevels (2'b) protrude beyond the freestanding projection (6) in opposite circumferential directions.

3. Pneumatic vehicle tyre according to Claim 1, **characterized in that** at least one, preferably both, bevel(s) (2'b) protrude(s) beyond the freestanding projection (6) on both sides.

4. Pneumatic vehicle tyre according to one of Claims 1 to 3, **characterized in that** the bevels (2'b) protrude beyond the freestanding projection (6) by at least 5.0 mm.

5. Pneumatic vehicle tyre according to one of Claims 1 to 4, **characterized in that** the angle (β) at which the bevels (2'b) run in relation to the radial direction is 45° to 50°.

6. Pneumatic vehicle tyre according to one of Claims 1 to 5, **characterized in that** the bevel (2'b) formed on the one groove edge (2c) has an offset (a₁) of 6% to 15%, in particular of 8% to 12%, of the circumferential length (l_{L}, l_{M}, l_{K}) of the respective pitch (L, M, K) in the circumferential direction in relation to the bevel (2'b) formed on the other groove edge (2b).

7. Pneumatic vehicle tyre according to one of Claims 1 to 6, **characterized in that** the height (h₁) of the freestanding projection (4) is up to 20% of the depth of the tread pattern (T₁).

8. Pneumatic vehicle tyre according to one of Claims 1 to 7, **characterized in that**, in each pitch (L, M, K), there are provided on each groove flank (2b) two lateral projections (7), which are formed on the groove base (2a) of the circumferential groove (2) and are elongated in the circumferential direction, wherein the bevels (2'b) on the groove edges (2c) respectively run between the lateral projections (7).

9. Pneumatic vehicle tyre according to Claim 8, **characterized in that** each lateral projection (7) is delimited in the radial direction by a top surface (7a), which slopes down towards the middle of the circumferential groove (2) and is inclined in relation to the radial direction at a constant angle (γ) of 30° to 55°.

10. Pneumatic vehicle tyre according to Claim 9, **characterized in that** the top surface (7a) of each lateral projection (7) ends on the inner side of the groove at an edge (7d), which runs at a constant depth (t₁) and in plan view at an angle (δ) of 1° to 3° in relation to the circumferential direction.

11. Pneumatic vehicle tyre according to one of Claims 8 to 10, **characterized in that** the lateral projections (7) in plan view adjoin the bevels (2'b) of the groove edges (2c) .

12. Pneumatic vehicle tyre according to one of Claims 8 to 11, **characterized in that** each lateral projection (7) has in the circumferential direction a length of extent (l₁) of 16.0 mm to 25.0 mm.

13. Pneumatic vehicle tyre according to one of Claims 8 to 12, **characterized in that** each lateral projection (7) has a height (h₂ₘᵢₙ, h₂ₘₐₓ) of 35% to 65% of the depth of the tread pattern (T₁).

14. Pneumatic vehicle tyre according to one of Claims 8 to 13, **characterized in that** each lateral projection (7) has in the axial direction a width (b₂ₘᵢₙ, b₂ₘₐₓ) of 10% to 25% of the width (B₁) of the circumferential groove (2).

## Revendications

1. Pneumatique de véhicule, comprenant une bande de roulement dotée d'éléments de sculpture positifs, tels que des bandes de sculpture ou des rangées de blocs de sculpture, qui sont disposés sur la circonférence de bande de roulement selon une séquence de pas composée d'au moins deux pas (L, M, K) ayant des longueurs circonférentielles différentes (l_{L}, l_{M}, l_{K}), et comprenant au moins une rainure circonférentielle (2) réalisée à une profondeur de sculpture (T₁) et dotée d'un fond de rainure (2a), de flancs de rainure (2b) et de bords de rainure (2c), une pluralité de saillies (6) isolées, espacées les unes des autres, étant réalisée sur le fond de rainure (2a) et présentant une hauteur (h₁) de 10 % à 30 % de la profondeur de sculpture (T₁), une largeur (b₁) de 25 % à 40 % de la largeur (B₁) de la rainure circonférentielle (2) et une longueur d'extension (l₁) de 15 % à 40 % de la longueur circonférentielle (l_{L}, l_{M}, l_{K}) du pas respectif (L, M, K),
**caractérisé en ce que** sur le côté de chaque saillie isolée (6), les deux bords de rainure (2c) de la rainure circonférentielle (2) sont biseautés par endroits de telle sorte que les flancs de rainure (2b) présentent des biseaux (2'b) qui dépassent respectivement de la saillie isolée (6) dans la direction circonférentielle au moins d'un côté, s'étendent selon un angle (β) de 35° à 55° par rapport à la direction radiale, et présentent une largeur (b_{F}) de 1,2 mm à 2,0 mm.

2. Pneumatique de véhicule selon la revendication 1, **caractérisé en ce que** les biseaux (2'b) dépassent de la saillie isolée (6) dans des directions circonférentielles opposées.

3. Pneumatique de véhicule selon la revendication 1, **caractérisé en ce qu'**au moins un biseau, de préférence les deux biseaux, (2'b) dépasse (nt) des deux côtés de la saillie isolée (6).

4. Pneumatique de véhicule selon l'une quelconque des revendications 1 à 3, **caractérisé en ce que** les biseaux (2'b) dépassent de la saillie isolée (6) d'au moins 5,0 mm.

5. Pneumatique de véhicule selon l'une quelconque des revendications 1 à 4, **caractérisé en ce que** l'angle (β), selon lequel les biseaux (2'b) s'étendent par rapport à la direction radiale, est de 45° à 50°.

6. Pneumatique de véhicule selon l'une quelconque des revendications 1 à 5, **caractérisé en ce que** le biseau (2'b) réalisé sur ledit un bord de rainure (2c) présente par rapport au biseau (2'b) réalisé sur l'autre bord de rainure (2b) dans la direction circonférentielle un décalage (a₁) de 6 % à 15 %, en particulier de 8 % à 12 %, de la longueur circonférentielle (l_{L}, l_{M}, l_{K}) du pas respectif (L, M, K) .

7. Pneumatique de véhicule selon l'une quelconque des revendications 1 à 6, **caractérisé en ce que** la hauteur (h₁) de la saillie isolée (4) peut atteindre 20 % de la profondeur de sculpture (T₁).

8. Pneumatique de véhicule selon l'une quelconque des revendications 1 à 7, **caractérisé en ce qu'**à chaque pas (L, M, K) sur chaque flanc de rainure (2b), deux saillies latérales (7), réalisées sur le fond de rainure (2a) de la rainure circonférentielle (2), étendues dans la direction circonférentielle, sont prévues, les biseaux (2'b) aux bords de rainure (2c) s'étendant respectivement entre les saillies latérales (7) .

9. Pneumatique de véhicule selon la revendication 8, **caractérisé en ce que** chaque saillie latérale (7) est délimitée dans la direction radiale par une surface de recouvrement (7a) qui descend vers le centre de la rainure circonférentielle (2) et est inclinée par rapport à la direction radiale selon un angle constant (γ) de 30° à 55°.

10. Pneumatique de véhicule selon la revendication 9, **caractérisé en ce que** la surface de recouvrement (7a) de chaque saillie latérale (7) se termine côté intérieur de la rainure au niveau d'un bord (7d) qui s'étend à une profondeur constante (t₁) ainsi qu'en vue de dessus selon un angle (δ) de 1° à 3° par rapport à la direction circonférentielle.

11. Pneumatique de véhicule selon l'une quelconque des revendications 8 à 10, **caractérisé en ce que** les saillies latérales (7) sont en vue de dessus adjacentes aux biseaux (2'b) des bords de rainure (2c).

12. Pneumatique de véhicule selon l'une quelconque des revendications 8 à 11, **caractérisé en ce que** chaque saillie latérale (7) présente dans la direction circonférentielle une longueur d'extension (l₁) de 16,0 mm à 25,0 mm.

13. Pneumatique de véhicule selon l'une quelconque des revendications 8 à 12, **caractérisé en ce que** chaque saillie latérale (7) présente une hauteur (h₂ₘᵢₙ, h₂ₘₐₓ) de 35 % à 65 % de la profondeur de sculpture (T₁).

14. Pneumatique de véhicule selon l'une quelconque des revendications 8 à 13, **caractérisé en ce que** chaque saillie latérale (7) présente dans la direction axiale une largeur (b₂ₘᵢₙ, b₂ₘₐₓ) de 10 % à 25 % de la largeur (B₁) de la rainure circonférentielle (2).
